# EUROPÄISCHE PATENTANMELDUNG

(11) **EP 4 280 329 A2**
(43) Veröffentlichungstag der Anmeldung: **22.11.2023**
(21) Anmeldenummer: 23173767.7
(22) Anmeldetag: 16.05.2023
(51) Int. Cl.: H01M 10/04, H01M 50/209, H01M 50/211

(54) **BATTERIEMODULGEHÄUSE UND VERFAHREN ZUM EINBAU EINER MEHRZAHL VON BATTERIEZELLEN EINES ENERGIESPEICHERS IN EIN BATTERIEMODULGEHÄUSE**

(30) Priorität: 16.05.2022 DE 102022112264
(71) Anmelder: Blackstone Technology Holding AG, 6340 Baar (CH)
(72) Erfinder: Gritzka, Holger, 01900 Grossröhrsdorf (DE); Flaschenträger, David, 6006 Luzern (CH)
(74) Vertreter: Herrmann, Johanna

(57) **Zusammenfassung**

Ein Batteriemodulgehäuse (10) für eine Mehrzahl von Batteriezellen (15) eines Energiespeichers enthält eine Batteriezellenhalterung (5), welche zur Aufnahme der einen Zellstapel bildenden Batteriezellen (15) ausgebildet ist. Die Batteriezellenhalterung (5) umfasst ein Halterungselement (1), wobei das Halterungselement (1) ausgebildet ist, den Zellstapel ringförmig zu umgeben, wobei das Halterungselement (1) ein erstes längsseitiges Halteelement (3), ein zweites längsseitiges Halteelement (4), ein erstes Verbindungselement (6) und ein zweites Verbindungselement (7) umfasst, wobei durch die ersten und zweiten Verbindungselemente (6, 7) eine erste und zweite Querverbindung zu den ersten und zweiten längsseitigen Halteelementen (3, 4) ausgebildet ist, wobei zumindest eines der ersten oder zweiten Verbindungselemente (6, 7) ein Spannelement (8, 18) enthält.

## Beschreibung

### Hintergrund

Die vorliegende Erfindung betrifft ein Batteriemodulgehäuse. Insbesondere betrifft die Erfindung ein Batteriemodulgehäuse enthaltend eine Batteriemodulhalterung für einen Energiespeicher, welcher eine Mehrzahl von Batteriezellen umfasst. Die Erfindung betrifft auch ein Verfahren zum Einbau einer Mehrzahl von Batteriezellen eines Energiespeichers in ein Batteriemodulgehäuse.

### Stand der Technik

Batteriezellen werden zur Erhöhung der Speicherkapazität eines Energiespeichers in Batteriemodulen angeordnet, wobei ein Batteriemodul in einem Batteriemodulgehäuse angeordnet ist, welches eine Mehrzahl von Batteriezellen enthält. Insbesondere können Batteriesysteme je nach Anwendung einen Verbund von bis zu mehreren tausend individuellen Batteriezellen ausbilden. Für Anwendungen, bei denen eine Systemspannung benötigt wird, die ein Mehrfaches der eigentlichen Zellspannung beträgt, ergibt sich eine Mindestanzahl von Batteriezellen, die größer als eine einzige Batteriezelle ist.

Zur Vereinfachung einer Weiterverarbeitung wird in vielen Fällen ein modularer Ansatz gewählt, bei dem eine Anzahl von X Batteriezellen im Batteriemodul zusammengefasst sind und anschließend eine Anzahl von Y Batteriemodulen zum Batteriesystem verschaltet werden.

So beträgt z.B. eine in der Elektromobilität gängige System-Nennspannung 360V. Durch eine Nominalspannung von ca. 3,7 V einer Lithium-Ionen-Zelle mit Nickel-basierter Kathode ergibt sich hieraus häufig eine elektrische Serienschaltung von 96 Zellen.

Je nach Anforderung an den Energieinhalt einer Batterie insbesondere für eine Anwendung in der Elektromobilität kann es notwendig sein, mehrere Batteriezellen darüber hinaus elektrisch parallel zu verschalten. So können im Extremfall Batterien von Elektrofahrzeugen aus mehreren Tausend Batteriezellen bestehen. Für Anwendungen im Nutzfahrzeug- oder Industrie-Bereich können die Batteriesysteme nochmals größer und die Anzahl der notwendigen Batteriezellen entsprechend noch höher ausfallen.

In obigem Beispiel ergibt sich für die mindestens 96 Batteriezellen eine durchaus gängige Anordnung von 12 Batteriemodulen zu jeweils 8 Zellen, oder entsprechend 8 Batteriemodulen zu jeweils 12 Zellen.

Jedes dieser Batteriemodule umfasst ein Batteriemodulgehäuse, elektrische Kontakte für die Leistungsanschlüsse und typischerweise elektrische Anschlüsse, mit denen entweder ein Batterie-Management-System (BMS) innerhalb des Batteriemoduls angesprochen werden kann, oder, welches einem BMS außerhalb des Batteriemoduls erlaubt, die einzelnen Zellspannungen und evtl. andere sicherheits- und funktionsrelevanten Parameter zu erfassen.

Das Batteriemodul beinhaltet die eigentlichen Batteriezellen, welche mechanisch und elektrisch entsprechend verbunden sind sowie unter Umständen Haltevorrichtungen um Batteriezellen, Platinen, Drähte, Sensoren und Kabel an Ort und Stelle zu halten, oder eine Montage der Batteriemodule in einer übergeordneten Struktur zu ermöglichen (z.B. Schraubpunkte).

Ein Beispiel für ein Batteriemodul ist in der DE 10 2018 116 734 A1 offenbart. Eine Batteriezelle ist üblicherweise als eine elektrochemische Zelle ausgebildet, die eine Kathode, also eine positive Elektrode, eine Anode, also eine negative Elektrode, einen Separator, der die positive Elektrode von der negativen Elektrode trennt, sowie ein Zellgehäuse umfasst, welches die positive Elektrode, die negative Elektrode, den Separator und einen Elektrolyten aufnimmt. Im Zellgehäuse sind die vorgenannte positive Elektrode, die negative Elektrode und der Separator zumindest teilweise aufgenommen. Die Anode und Kathode können über Kontakte einen Stromkreis mit einem Verbraucher ausbilden. Die Kontakte jeder Batteriezelle eines Batteriemoduls sind miteinander elektrisch leitend verbunden, sodass Strom aus dem Energiespeicher gewonnen werden kann, indem der Energiespeicher entladen wird oder dem Energiespeicher gegebenenfalls Strom zugeführt werden kann, um den Energiespeicher wieder aufzuladen.

Eine elektrochemische Zelle kann für eine Primärbatterie oder eine Sekundärbatterie zum Einsatz kommen. Als Primärbatterie wird in der Folge eine Batterie bezeichnet, die nicht wiederaufladbar ist, das heisst, für den einmaligen Gebrauch bestimmt ist. Als Sekundärbatterie wird in der Folge eine Batterie bezeichnet, die wiederaufladbar ist: Oftmals wird für diesen Typ Energiespeicher auch der Begriff Akkumulator verwendet.

Sekundärbatterien sind bereits seit Jahrzehnten in verschiedensten Anwendungen im Einsatz, für deren elektrochemische Zellen können unterschiedlichste Materialien zum Einsatz kommen. Wenn Sekundärbatterien im Transportwesen, als Notstromaggregat, als Speicher zum Ausgleich von Schwankungen in der Stromversorgung, als Speichersystem für erneuerbare Energien zum Einsatz kommen, ist es in der Regel erforderlich, eine Vielzahl von Batteriezellen bereitzustellen, um die nötige Speicherkapazität bereitzustellen.

Die Kontakte der Kathoden und Anoden jeweils benachbarter Batteriezellen eines Batteriemoduls werden miteinander üblicherweise mittels eines Schweissverfahrens verbunden, nachdem sie in ein Gehäuse gestapelt worden sind. Das Gehäuse wird danach mittels eines Deckels verschlossen. Der Deckel enthält Öffnungen für die positiven und negativen Kontaktpole sowie Öffnungen zur Zufuhr des flüssigen Elektrolyten, falls ein flüssiger Elektrolyt erforderlich ist. Die Kontaktpole werden nach der Montage des Deckels angegossen. Der Deckel ist üblicherweise nicht abnehmbar, daher wird jedem Zellstapel der Elektrolyt durch die hierfür vorgesehenen Öffnungen zugeführt, die nach Abschluss der Befüllung ebenfalls verschlossen werden. Erst in diesem Zustand kann ein initialer Ladezyklus (Formation) durchgeführt werden. Nach Abschluss des Ladezyklus ist der Akkumulator bereit für den Einsatz.

Das beschriebene Montageverfahren ist in der Praxis sehr kompliziert, da es sehr viele Prozessschritte umfasst und ist zudem nicht einfach auf unterschiedliche Batteriezellenformate oder unterschiedliche Anforderungen an die Speicherkapazität des Energiespeichers, die eine variable Anzahl von Batteriezellen erfordern, anpassbar.

Das Batteriemodulgehäuse ist üblicherweise eine aus Metallblechen verschweißte, oder geschraubte Konstruktion, welche in den meisten Fällen nicht oder nur zerstörend wieder zerlegt werden kann, insbesondere für Batteriesysteme für Mobilitätsanwendungen, in welchen entweder prismatische oder Pouch-Zellen verbaut werden.

Insbesondere bei Gabelstaplerbatterien ist die Schock-Resistenz sehr groß. Bis zu 20G muss ein Batteriezell-Modul ohne mechanische Beschädigung aushalten. Um ein Verrutschen der Batteriezellen im Inneren der Batteriemodule zu vermeiden, werden diese häufig mit separaten Strukturen, die als Zellhalter ausgebildet sind, an Ort und Stelle gehalten, d.h. mittels der Zellhalter gegen ein Verrutschen gesichert.

Zudem kann es mit zunehmender Gebrauchsdauer einer Batterie zu einem Aufblähen der oder einiger der Batteriezellen eines Batteriemoduls kommen. Daher wird gemäss DE 10 2020 117 191 A1 vorgeschlagen, eine Mehrzahl von Batteriezellen mittels eines Rahmens zu einem Batteriezellenpaket zusammenzufassen, wobei eine Mehrzahl von Batteriezellenpakete nebeneinander in einem Gehäuse angeordnet werden. Zwischen den Batteriezellenpaketen und zwischen der Gehäuseinnenwand und den daran angrenzenden Batteriezellenpaketen befinden sich Federelemente, welche eine durch das Aufblähen und der damit verbundenen Vergrösserung des Volumens der Batteriezellen wirkende Druckkraft kompensieren können. Die Positionierung dieser Federelemente zwischen den Batteriezellenpaketen ist in der Praxis nicht ganz einfach zu bewerkstelligen, da die Federelemente gleichmässig auf den Seitenflächen der an äusserster Position befindlichen Batteriezellen des entsprechenden Batteriezellenpakets angeordnet sind, wo sich aber bereits der Rahmen befinden kann. Daher wird gemäss DE 10 2020 117 191 A1 vorgeschlagen, je ein zusätzliches Plattenelement zwischen zwei benachbarten Batteriezellenpaketen vorzusehen, welches die als Spiralfedern ausgebildeten Federelemente aufnimmt. Hierdurch werden aber zusätzlich zu den schon im Dokument DE 10 2008 034 862 B4 als nachteilig angesehenen Spalten zwischen benachbarten Zellpaketen, die zu einer Beeinträchtigung des Wärmeübergangs führen, noch zusätzliche Plattelemente erforderlich, mit der Konsequenz, dass sich nicht nur der Wärmeübergang weiter verschlechtern dürfte, sondern auch zusätzlicher Bauraum erforderlich für die Plattenelemente vorgesehen werden muss.

Daher wird in dem Dokument DE 10 2018 116 734 A1 vorgeschlagen, die Batteriezellen als Batteriezellenpaket in ein Batteriemodulgehäuse einzuschieben. Das Batteriemodulgehäuse ist als ein Prisma mit rechteckiger Grundfläche ausgebildet, dessen Grundfläche und Deckfläche als Öffnungen ausgebildet sind. Die Batteriezellen können durch die Öffnungen in das Batteriemodulgehäuse eingeschoben werden. Danach werden die Öffnungen der Grundfläche und Deckfläche mittels zwei Kopfplatten verschlossen. Zwischen den Kopfplatten und dem Batteriezellenpaket sind Federelemente angeordnet. Die Kopfplatten werden anschliessend mit dem Batteriemodulgehäuse verschweisst oder verschraubt, sodass durch die Federelemente eine Vorspannkraft auf die Batteriezellen des im Batteriemodulgehäuse befindlichen Batteriezellenpakets ausgeübt wird. Falls es zum Aufblähen der oder einiger der Batteriezellen kommen sollte, kann die damit einhergehende Vergrösserung des Volumens des Batteriezellenpakets durch das oder die Federelemente kompensiert werden. Zwar können mit dieser Lösung die zusätzlichen Plattenelemente der in der DE 10 2020 117 191 A1 beschriebenen Anordnung vermieden werden, allerdings ist die Montage der Batteriezellenpakete nach wie vor komplex, da die unter Vorspannung stehenden Kopfplatten mit dem Batteriemodulgehäuse in einem weiteren Arbeitsschritt verschweisst oder verschraubt werden müssen.

Bei der Verwendung prismatischer und insbesondere Pouch-Zellen, für welche ein starres Gehäuse nicht erforderlich ist, ist für den sicheren und langfristigen Betrieb eine möglichst homogene, definierte und andauernde mechanische Vorspannung in Zellen-Dickenrichtung auf die Batteriezellen auszuüben. Dies wird in der Regel erreicht, indem die Batteriezellen bei der Montage des Batteriemoduls mechanisch vorgespannt werden und in diesem vorgespannten Zustand das Batteriemodul geschlossen, in der Regel geschweißt wird, wie beispielsweise in der DE 10 2018 116 734 A1 gezeigt ist.

Es besteht daher Bedarf an einem Batteriemodulgehäuse, welches einfacher aufgebaut ist, zerlegbar ist sowie einem Montageverfahren welches flexibler, einfacher und kostengünstiger als die vorbekannten Montageverfahren ist. Zudem besteht Bedarf an einem Gehäuse, das zur Wiederverwertung oder Entsorgung von den Batteriezellen einfach zerlegt werden kann. Batteriezellen und Gehäuseelemente, die aus unterschiedlichen Werkstoffen und daher unterschiedlichen Wertstoffen bestehen, können auf diese Weise einfach getrennt werden und in den entsprechenden Wertstoffkreislauf rückgeführt werden.

### Aufgabe der Erfindung

Es ist Aufgabe der Erfindung, ein Batteriemodulgehäuse für einen Energiespeicher sowie ein Verfahren zur Montage einer Mehrzahl von Batteriezellen in ein Batteriemodulgehäuse für den Energiespeicher bereitzustellen, welches keine Schweissverbindungen, Nietverbindungen oder Schraubverbindungen erfordert. Das Batteriemodulgehäuse soll für unterschiedliche Batteriezellen, beispielsweise prismatische Batteriezellen oder Pouchzellen, verwendbar sein.

### Beschreibung der Erfindung

Die Lösung der Aufgabe der Erfindung erfolgt durch ein Batteriemodulgehäuse gemäss Anspruch 1. Vorteilhafte Ausführungsbeispiele des Batteriemodulgehäuses sind Gegenstand der Ansprüche 2 bis 8. Ein Verfahren zur Herstellung des Batteriemodulgehäuses ist Gegenstand von Anspruch 9. Vorteilhafte Verfahrensvarianten sind Gegenstand des Anspruchs 10.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Batteriemodulgehäuse sowie das erfindungsgemässe Verfahren. Die Beschreibung eines bestimmten Batteriemodulgehäuse ist nur als beispielhaft anzusehen. In der Beschreibung und den Ansprüchen werden die Begriffe "enthalten", "umfassen", "aufweisen" als "enthalten, aber nicht beschränkt auf" interpretiert.

Ein Batteriemodulgehäuse für eine Mehrzahl von Batteriezellen eines Energiespeichers enthält eine Batteriezellenhalterung, welche zur Aufnahme der einen Zellstapel bildenden Batteriezellen ausgebildet ist. Die Batteriezellenhalterung umfasst ein Halterungselement, wobei das Halterungselement ausgebildet ist, den Zellstapel ringförmig zu umgeben, wobei das Halterungselement ein erstes längsseitiges Halteelement, ein zweites längsseitiges Halteelement, ein erstes Verbindungselement und ein zweites Verbindungselement umfasst. Durch die ersten und zweiten Verbindungselemente ist eine erste und zweite Querverbindung zu den ersten und zweiten längsseitigen Halteelementen ausgebildet, wobei zumindest eines der ersten oder zweiten Verbindungselemente ein Spannelement enthält. Mittels des Spannelements kann eine Druckkraft auf den Zellstapel ausgeübt werden, sodass der Zellstapel im Batteriemodulgehäuse gehalten werden kann. Zudem ermöglicht die Verwendung des Spannelements einen Ausgleich bei einer Volumenänderung, die durch ein betriebsbedingtes Schwellverhalten zumindest einer der Batteriezellen des Zellstapels auftreten kann.

Gemäss eines Ausführungsbeispiels weist das Spannelement eine Krümmung auf, wenn es nicht eingespannt ist. Insbesondere umfasst das Spannelement eine Blattfeder. Mittels des Spannelements kann der Zellstapel der Batteriezellen mit einer definierten Vorspannkraft in der Batteriezellenhalterung aufgenommen werden.

Gemäss eines Ausführungsbeispiels enthält das Spannelement ein Lastverteilungselement. Mittels des Lastverteilungselements kann die mittels des Spannelements erzeugte Druckkraft über eine grössere Auflagefläche auf die Batteriezellen verteilt werden. Insbesondere kann die Druckkraft gleichmässig auf die Seitenflächen der Batteriezellen übertragen werden. Hierzu kann das Lastverteilungselement insbesondere im Wesentlichen die gleiche Oberfläche wie die Seitenfläche der Batteriezelle aufweisen, auf welcher es im Einbauzustand aufliegt.

Gemäss eines Ausführungsbeispiels enthält zumindest eines der Halterungselemente oder der Spannelemente einen elektrischen Leistungsanschluss. Dieses Ausführungsbeispiel ermöglicht eine Integration der elektrischen Anschlüsse in das oder die Halterungselemente und ist insbesondere für Anwendungen vorteilhaft einsetzbar, für welche nur ein begrenzter Bauraum zur Verfügung steht.

Gemäss eines Ausführungsbeispiels sind das Halterungselement und das Spannelement aus elektrisch isolierenden Materialien hergestellt. Insbesondere entfällt gemäss dieses Ausführungsbeispiels das Erfordernis zusätzliche Schichten aus elektrisch isolierenden Materialien vorzusehen, die beim Einsatz von elektrisch leitfähigen Materialien für das Halterungselement oder das Spannelement erforderlich wären.

Gemäss eines Ausführungsbeispiels enthält das Halterungselement eine Mehrzahl von Segmenten. Insbesondere können je zwei benachbarte Segmente durch ein Filmgelenk miteinander verbunden sein.

Ein Batteriemodulgehäuse für eine Mehrzahl von Batteriezellen eines Energiespeichers gemäss eines Ausführungsbeispiels enthält eine Batteriezellenhalterung, welche zur Aufnahme der einen Zellstapel bildenden Batteriezellen ausgebildet ist. Die Batteriezellenhalterung umfasst ein erstes Halterungselement und ein zweites Halterungselement, wobei die ersten und zweiten Halterungselemente ausgebildet sind, den Zellstapel ringförmig zu umgeben. Jedes der ersten und zweiten Halterungselemente umfasst je ein erstes längsseitiges Halteelement, je ein zweites längsseitiges Halteelement und je ein erstes und ein zweites Verbindungselement. Durch die entsprechenden ersten und zweiten Verbindungselemente ist je eine erste und zweite Querverbindung zu den entsprechenden ersten und zweiten längsseitigen Halteelementen ausgebildet. Zwischen dem ersten Halterungselement und dem zweiten Halterungselement ist zumindest ein erstes oder zweites Spannelement angeordnet, welches sich im Einbauzustand zwischen dem ersten Halterungselement und dem zweiten Halterungselement erstreckt. Mittels des Spannelements kann im Einbauzustand eine Druckkraft auf den Zellstapel ausgeübt werden, sodass der Zellstapel in der Batteriezellenhalterung eingespannt wird. Mittels des Spannelements kann insbesondere eine Flächenlast auf den Zellstapel aufgebracht werden, wenn das Spannelement im eingespannten Zustand auf der an der Aussenseite des Zellstapels angeordneten Batteriezelle flächig aufliegt. Mit andern Worten entspricht die Auflagefläche des Spannelements im Wesentlichen der Fläche einer der Seitenwände der Batteriezelle oder umfasst zumindest mehr als 50% der Fläche der Seitenwand der Batteriezelle. Insbesondere kann das Spannelement ohne Schweißverbindung oder Klebeverbindung mit den dem ersten und zweiten Halterungselement verbunden werden.

Häufig werden Batteriemodule derart gefertigt, dass das Batteriemodulgehäuse an 4 bzw. 5 Seiten zumindest teilweise geschlossen ist. Die offene Seite oder die offenen Seiten ermöglichen den Zugang zu den Anschlüssen der individuellen Batteriezellen und/oder ermöglichen die Durchführung von weiteren Arbeitsschritten die der eigentlichen Montage des Batteriemodulgehäuses nachgelagert sind. Nach Beendigung der Montage des Batteriemodulgehäuses können die offenen Seiten beispielsweise mit einem Kunststoffdeckel verschlossen werden.

Gemäss eines Ausführungsbeispiels weist das Spannelement eine Krümmung auf, wenn es nicht eingespannt ist. Beispielsweise umfasst das Spannelement eine Blattfeder, sodass das Spannelement im geschlossenen Zustand eine näherungsweise homogene Flächenlast auf den Zellstapel aufprägt. Zusätzlich kann zwischen Zellstapel und Spannelement ein die Last verteilendes Lastverteilungselement angebracht werden, sodass die mittels des Spannelements erzeugte Druckkraft über eine grössere Auflagefläche auf die Batteriezellen verteilt werden kann. Insbesondere kann die Druckkraft gleichmässig auf die Seitenflächen der Batteriezellen übertragen werden. Hierzu kann das Lastverteilungselement insbesondere im Wesentlichen die gleiche Oberfläche wie die Seitenfläche der Batteriezelle aufweisen, auf welcher es im Einbauzustand aufliegt.

Insbesondere ist zwischen dem mindestens einen Spannelement und dem ersten und zweiten Halterungselement eine Steckverbindung ausgebildet. Die Steckverbindung ist derart ausgebildet, dass sie werkzeugfrei oder durch ein entsprechendes Werkzeug zerstörungsfrei gelöst und anschließend das Halterungselement wiederverwendet werden kann oder der entsprechenden Wertstoffsammelstelle zugeführt werden kann.

Gemäss eines Ausführungsbeispiels ist somit ein Spannelement zwischen dem ersten und zweiten Halterungselement angeordnet, wobei sich das Spannelement zwischen dem ersten Verbindungselement des ersten Halterungselements und dem ersten Verbindungselement des zweiten Halterungselements erstreckt. Insbesondere könnten das erste und zweite Verbindungselement je eine Ausnehmung enthalten, die zur Aufnahme eines ersten Endes und eines gegenüberliegenden zweiten Endes des Spannelements ausgebildet sind. Das Spannelement kann in die beiden Ausnehmungen eingesteckt werden und liegt auf der äussersten Batteriezelle des Zellstapels auf. Die Auflage kann insbesondere entlang einer Auflagefläche erfolgen, die möglichst weitgehend der Seitenfläche der Batteriezelle entspricht. Wenn die Auflagefläche des Spannelements im Wesentlichen der Seitenfläche der Batteriezelle entspricht oder zumindest mindestens zu 50% mit der Fläche der Batteriezelle übereinstimmt, kann eine besonders homogene Verteilung der Druckkraft auf die Auflagefläche erfolgen.

Gemäss dieses Ausführungsbeispiels können das erste und zweite Halterungselement auf der dem Spannelement gegenüberliegenden Seite verbunden sein, das heisst, die ersten und zweiten Verbindungselemente können eine Einheit ausbilden.

Die ersten und zweiten Verbindungselemente können auch ein Zwischenstück aus einem elastischen Material enthalten, welches dehnbar ist. Hiermit kann der Abstand der ersten und zweiten Halterungselemente voneinander verändert werden, was die Aufnahme des Zellstapels in den ersten und zweiten Halterungselementen vereinfacht. Das Zwischenstück aus elastischem Material kann ebenfalls als Spannelement ausgebildet sein oder ein Spannelement umfassen.

Gemäss eines Ausführungsbeispiels ist zwischen dem ersten Halterungselement und dem zweiten Halterungselement ein erstes Spannelement angeordnet, welches sich im Einbauzustand zwischen dem ersten Verbindungselement des ersten Halterungselements und dem ersten Verbindungselement des zweiten Halterungselements erstreckt. Zudem ist gemäss dieses Ausführungsbeispiels zwischen dem ersten Halterungselement und dem zweiten Halterungselement ein zweites Spannelement angeordnet, welches sich im Einbauzustand zwischen dem zweiten Verbindungselement des ersten Halterungselements und dem zweiten Verbindungselement des zweiten Halterungselements erstreckt.

Insbesondere ist zwischen dem ersten Spannelement und dem ersten und zweiten Halterungselement eine Steckverbindung ausgebildet und auch zwischen dem zweiten Spannelement und dem ersten und zweiten Halterungselement eine Steckverbindung ausgebildet.

Gemäss eines Ausführungsbeispiels ist das erste Spannelement in einer Ausnehmung aufgenommen, die im ersten Verbindungselement des ersten Halterungselements angeordnet ist und in einer weiteren Ausnehmung aufgenommen, die im ersten Verbindungselement des zweiten Halterungselements angeordnet ist. Das zweite Spannelement ist in einer Ausnehmung aufgenommen, die im zweiten Verbindungselement des ersten Halterungselements angeordnet ist und in einer weiteren Ausnehmung aufgenommen, die im zweiten Verbindungselement des zweiten Halterungselements angeordnet ist.

Gemäss eines Ausführungsbeispiels enthält zumindest eines der ersten und zweiten Halterungselemente oder der ersten und zweiten Spannelemente einen elektrischen Leistungsanschluss. Der elektrische Leistungsanschluss für das Batteriemodul kann somit an jeder beliebigen Stelle des Batteriemoduls angeordnet werden. Daher kann das Batteriemodul genau an die Anforderungen des entsprechenden Verbrauchers angepasst werden, d.h. an den entsprechenden Einsatzbereich angepasst werden.

Gemäss eines Ausführungsbeispiels sind das erste und zweite Halterungselement und das erste und zweite Spannelement aus elektrisch isolierenden Materialien hergestellt. Insbesondere entfällt gemäss dieses Ausführungsbeispiels die Notwendigkeit, zusätzliches Isolationsmaterial vorzusehen, was für herkömmliche Halterungselemente aus Metall zu berücksichtigen war.

Gemäss eines Ausführungsbeispiels enthält zumindest eines der ersten und zweiten Halterungselemente eine Mehrzahl von Segmenten. Insbesondere können je zwei benachbarte Segmente durch ein Filmgelenk miteinander verbunden sein. Durch das erste und zweite Halterungselement wird insbesondere ein Rahmenelement ausgebildet. Durch jedes der ersten und zweiten Halterungselemente kann je ein separates Rahmenelement ausbildet werden oder alternativ können die ersten und zweiten Halterungselemente an einer Seite über die ersten und zweiten Verbindungselemente miteinander verbunden sein, insbesondere durch ein Zwischenstück. Somit kann das den Zellstapel auf mindestens vier Seiten umschließende Rahmenelement ist aus einem einzigen Bauteil bestehen. Dieses Bauteil kann derart segmentiert sein, dass die einzelnen Segmente durch Filmgelenke miteinander dauerhaft verbunden sind. Durch Faltung der einzelnen Segmente entsteht eine dreidimensionale Struktur, in welcher die Batteriezellen aufgenommen werden können. Segmente, welche nicht über Filmgelenke miteinander verbunden sind, können lösbar miteinander verbunden werden.

Gemäss eines Ausführungsbeispiels kann das den Zellstapel auf mindestens vier Seiten umschließende Rahmenelement mindestens zwei Bauteile umfassen. Die Bauteile sind gemäss dieses Ausführungsbeispiels über entsprechende Verbindungselemente miteinander dauerhaft verbunden. Durch die Verbindung der Bauteile entsteht eine dreidimensionale Struktur, in welcher die Batteriezellen aufgenommen werden können. Insbesondere kann mindestens ein Vorspannelement mit den anderen Bauteilen mechanisch verbunden werden.

Gemäss eines Verfahrens zum Einbau einer Mehrzahl von Batteriezellen eines Energiespeichers in ein Batteriemodulgehäuse, wobei die Batteriezellen einen Zellstapel ausbilden, wobei der Zellstapel in einer Batteriezellenhalterung aufgenommen wird wobei die Batteriezellenhalterung ein erstes Halterungselement und ein zweites Halterungselement umfasst, werden die ersten und zweiten Halterungselemente über den Zellstapel gestülpt, sodass die ersten und zweiten Halterungselemente den Zellstapel ringförmig umgeben. Jedes der ersten und zweiten Halterungselemente je ein erstes längsseitiges Halteelement, je ein zweites längsseitiges Halteelement und je ein erstes und ein zweites Verbindungselement umfasst, wobei die entsprechenden ersten und zweiten Verbindungselemente je eine erste und zweite Querverbindung zu den entsprechenden ersten und zweiten längsseitigen Halteelementen ausbilden. Zwischen dem ersten Halterungselement und dem zweiten Halterungselement wird zumindest ein Spannelement angeordnet, sodass durch das Spannelement eine Druckkraft auf den Zellstapel ausgeübt wird, wodurch der Zellstapel in der Batteriezellenhalterung eingespannt wird.

Gemäss eines Ausführungsbeispiels wird zwischen dem ersten Halterungselement und dem zweiten Halterungselement zumindest ein erstes Spannelement angeordnet, welches sich im Einbauzustand zwischen dem ersten Verbindungselement des ersten Halterungselements und dem ersten Verbindungselement des zweiten Halterungselements erstreckt und wobei zwischen dem ersten Halterungselement und dem zweiten Halterungselement ein zweites Spannelement angeordnet wird, welches sich im Einbauzustand zwischen dem zweiten Verbindungselement des ersten Halterungselements und dem zweiten Verbindungselement des zweiten Halterungselements erstreckt, wobei das erste Spannelement eine erste Druckkraft auf den Zellstapel ausübt, wobei das zweite Spannelement eine zweite Druckkraft auf den Zellstapel ausübt, wobei die erste Druckkraft entgegengesetzt zur zweiten Druckkraft wirkt, sodass der Zellstapel in der Batteriezellenhalterung eingespannt wird.

### Kurzbeschreibung der Zeichnungen

Nachfolgend wird der erfindungsgemässe Batteriemodulgehäuse anhand einiger Ausführungsbeispiele dargestellt. Es zeigen
Fig. 1a eine Ansicht eines Batteriemodulgehäuses nach einem ersten Ausführungsbeispiel,
Fig. 1b einen Schnitt durch das Batteriemodulgehäuse gemäss Fig. 1a,
Fig. 1c einen Schnitt durch das Batteriemodulgehäuse gemäss Fig. 1a,
Fig. 1d eine Explosionsdarstellung des Batteriemodulgehäuses gemäss Fig. 1a,
Fig. 2a eine Ansicht eines Batteriemodulgehäuses nach einem zweiten Ausführungsbeispiel vor dem Zusammenbau,
Fig. 2b eine Ansicht des Batteriemodulgehäuses gemäss Fig. 2a nach dem Zusammenbau,
Fig. 3a eine Ansicht eines Batteriemodulgehäuses nach einem dritten Ausführungsbeispiel vor dem Zusammenbau,
Fig. 3b eine Ansicht des Batteriemodulgehäuses gemäss Fig. 3a nach dem Zusammenbau,
Fig. 4a eine Ansicht eines Batteriemodulgehäuses nach einem vierten Ausführungsbeispiel vor dem Zusammenbau,
Fig. 4b eine Ansicht des Batteriemodulgehäuses gemäss Fig. 4a nach dem Zusammenbau.

### Detaillierte Beschreibung der Zeichnungen

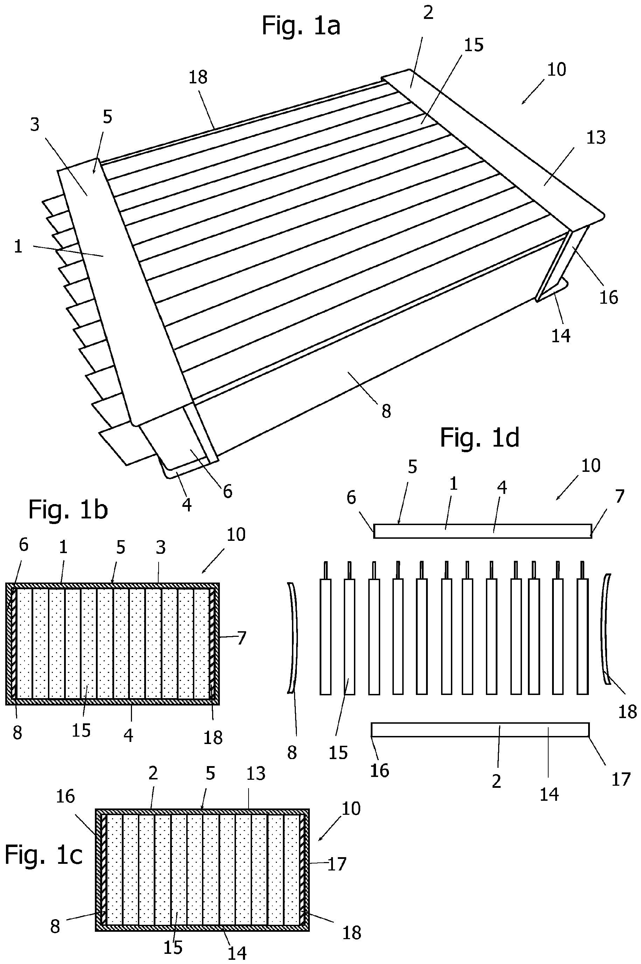

Fig. 1a zeigt eine Ansicht eines Batteriemodulgehäuses 10 nach einem ersten Ausführungsbeispiel. Das Batteriemodulgehäuse 10 für eine Mehrzahl von Batteriezellen 15 eines Energiespeichers enthält eine Batteriezellenhalterung 5, welche zur Aufnahme der einen Zellstapel bildenden Batteriezellen 15 ausgebildet ist, in der vorliegenden Darstellung sind exemplarisch 12 Batteriezellen 15 gezeigt. Die Batteriezellenhalterung 5 umfasst ein erstes Halterungselement 1 und ein zweites Halterungselement 2, wobei die ersten und zweiten Halterungselemente 1,2 ausgebildet sind, den Zellstapel ringförmig zu umgeben. Das erste Halterungselement 1 umfasst ein erstes längsseitiges Halteelement 3, ein zweites längsseitiges Halteelement 4, ein erstes Verbindungselement 6 und ein zweites Verbindungselement 7. Das zweite Halterungselement 2 umfasst ein erstes längsseitiges Halteelement 13, ein zweites längsseitiges Halteelement 14, ein erstes Verbindungselement 16 und ein zweites Verbindungselement 17. Durch das erste und zweite Verbindungselement 6, 7 ist als eine erste und zweite Querverbindung zu den entsprechenden ersten und zweiten längsseitigen Halteelementen 3, 4 des ersten Halterungselements 1 ausgebildet. Das erste Halterungselement 1 umschliesst somit die Batteriezellen 15, die im ersten Halterungselemente 1 aufgenommen sind. Durch das erste und zweite Verbindungselement 16, 17 ist eine erste und zweite Querverbindung zu den entsprechenden ersten und zweiten längsseitigen Halteelementen 13, 14 des zweiten Halterungselements 2 ausgebildet. Das zweite Halterungselement 2 umschliesst somit die Batteriezellen 15, die im zweiten Halterungselement 2 aufgenommen sind. Zwischen dem ersten Halterungselement 1 und dem zweiten Halterungselement 2 sind ein erstes und ein zweites Spannelement 8, 18 angeordnet, welche sich im Einbauzustand zwischen dem ersten Halterungselement 1 und dem zweiten Halterungselement 2 erstrecken.

Fig. 1b zeigt einen Schnitt durch das Batteriemodulgehäuse gemäss Fig. 1a in einer Schnittebene, die durch die Batteriezellen verläuft, mit Blickrichtung in Richtung des ersten Halterungselements 1. Fig. 1b zeigt somit das erste Halterungselement 1 der Batteriezellenhalterung 5. Die Batteriezellen 15, die einen Zellstapel ausbilden, sind vom ersten Halterungselement 1 umschlossen und werden somit vom ersten Halterungselement 1 derart gehalten, dass sie mit ihren Seitenflächen unmittelbar anliegend angeordnet sind. Das erste Halterungselement 1 umfasst ein erstes längsseitiges Halteelement 3, ein zweites längsseitiges Halteelement 4 sowie ein erstes Verbindungselement 6 und ein zweites Verbindungselement 7, welches eine Querverbindung zu den ersten und zweiten längsseitigen Halteelementen 3, 4 ausbildet.

Zwischen der äussersten Batteriezelle 15 des Zellstapels und dem ersten Verbindungselement 6 ist ein erstes Spannelement 8 angeordnet, welches in der Zeichnungsebene geschnitten dargestellt ist. Auch die Batteriezellen 15 sind geschnitten dargestellt, wobei der innere Aufbau der Batteriezellen 15 nicht dargestellt ist. Das erste Spannelement 8 kann in einer Ausnehmung des ersten Verbindungselements 6 aufgenommen sein. Insbesondere kann ein erster Endbereich des ersten Spannelements 8 im ersten Verbindungselement 6 befestigt sein, beispielsweise mittels einer Klemmverbindung, sodass es in seiner Position fixiert ist.

Zwischen der äussersten Batteriezelle 15 des Zellstapels und dem zweiten Verbindungselement 7 ist ein zweites Spannelement 18 angeordnet, welches in der Zeichnungsebene geschnitten dargestellt ist. Das zweite Spannelement 8 kann in einer Ausnehmung des zweiten Verbindungselements 7 aufgenommen sein. Insbesondere kann ein erster Endbereich des zweiten Spannelements 18 im zweiten Verbindungselement 7 befestigt sein, beispielsweise mittels einer Klemmverbindung, sodass es in seiner Position fixiert ist.

Fig. 1c zeigt einen Schnitt durch das Batteriemodulgehäuse gemäss Fig. 1a in einer Schnittebene, die durch die Batteriezellen verläuft, mit Blickrichtung in Richtung des zweiten Halterungselements 2. Fig. 1c zeigt somit das zweite Halterungselement 2 der Batteriezellenhalterung 5. Die Batteriezellen 15, die einen Zellstapel ausbilden, sind vom zweiten Halterungselement 2 umschlossen und werden somit vom zweiten Halterungselement 2 derart gehalten, dass sie mit ihren Seitenflächen unmittelbar anliegend angeordnet sind. Das zweite Halterungselement 2 umfasst ein erstes längsseitiges Halteelement 13, ein zweites längsseitiges Halteelement 14 sowie ein erstes Verbindungselement 16 und ein zweites Verbindungselement 17, welches eine Querverbindung zu den ersten und zweiten längsseitigen Halteelementen 13, 14 ausbildet.

Zwischen der äussersten Batteriezelle 15 des Zellstapels und dem ersten Verbindungselement 16 ist das auch in Fig. 1b dargestellte erste Spannelement 8 angeordnet, welches in der Zeichnungsebene geschnitten dargestellt ist. Auch die Batteriezellen 15 sind geschnitten dargestellt, wobei der innere Aufbau der Batteriezellen 15 nicht dargestellt ist. Das erste Spannelement 8 kann in einer Ausnehmung des ersten Verbindungselements 16 aufgenommen sein. Insbesondere kann ein zweiter Endbereich des ersten Spannelements 8 im ersten Verbindungselement 16 befestigt sein, beispielsweise mittels einer Klemmverbindung, sodass es in seiner Position fixiert ist. Der zweite Endbereich des ersten Spannelements 8 ist gegenüberliegend zu dessen ersten Endbereich angeordnet, der in Zusammenhang mit Fig. 1b beschrieben worden ist.

Zwischen der äussersten Batteriezelle 15 des Zellstapels und dem zweiten Verbindungselement 17 ist das zweite Spannelement 18 angeordnet, welches in der Zeichnungsebene geschnitten dargestellt ist. Das zweite Spannelement 18 kann in einer Ausnehmung des zweiten Verbindungselements 17 aufgenommen sein. Insbesondere kann ein zweiter Endbereich des zweiten Spannelements 18 im zweiten Verbindungselement 17 befestigt sein, beispielsweise mittels einer Klemmverbindung, sodass es in seiner Position fixiert ist. Der zweite Endbereich des zweiten Spannelements 18 ist gegenüberliegend zu dessen ersten Endbereich angeordnet, der in Zusammenhang mit Fig. 1b beschrieben worden ist.

Fig. 1d zeigt eine Explosionsdarstellung des Batteriemodulgehäuses 10 gemäss Fig. 1a. Das Batteriemodulgehäuse 10 ist zur Aufnahme einer Mehrzahl von Batteriezellen 15 bestimmt, im vorliegenden Beispiel 12 Batteriezellen 15, die eine im Wesentlichen prismatische Form aufweisen. Die Batteriezellen 15 können auch als Pouchzellen ausgebildet sein. Die Batteriezellen weisen elektrische Kontakte auf, die gemäss des vorliegenden Ausführungsbeispiels als elektrisch leitende Plättchen ausgebildet sind. Wie in Fig. 1a dargestellt, überragen die Kontakte die Batteriezellenhalterung 5. Sie können in einem nachfolgenden Arbeitsschritt auf die gewünschte Weise verbunden werden, sodass eine Parallelschaltung oder eine Serienschaltung der Batteriezellen 15 erhalten wird.

Die Batteriezellenhalterung 5 ist in ihren Einzelteilen dargestellt. Die Batteriezellenhalterung 5 umfasst das erste Halterungselement 1 und das zweite Halterungselement 2 sowie das erste Spannelement 8 und das zweite Spannelement 18. Das erste Halterungselement 1 ist als bandförmiges Element dargestellt, wobei dessen zweites längsseitiges Halteelement 4 sowie die daran angrenzenden ersten und zweiten Verbindungselemente 6, 7 sichtbar sind. Das erste längsseitige Halteelement ist durch das zweite längsseitige Halteelement 4 verdeckt, daher in Fig. 1d nicht sichtbar. Das zweite Halterungselement 2 ist als bandförmiges Element dargestellt, wobei dessen zweites längsseitiges Halteelement 14 sowie die daran angrenzenden ersten und zweiten Verbindungselemente 16, 17 sichtbar sind. Das erste längsseitige Halteelement ist durch das zweite längsseitige Halteelement 14 verdeckt, daher in Fig. 1d nicht sichtbar.

In Fig. 1d ist auch sichtbar, dass das erste Spannelement 8 und das zweite Spannelement 18 eine Krümmung aufweisen. In Fig. 1d ist das erste Spannelement 8 in seiner Einbaulage in Bezug auf die Batteriezellen 15 dargestellt. Gemäss des vorliegenden Ausführungsbeispiels kommt die konvexe Oberfläche des ersten Spannelements 8 mit der Seitenfläche der an äusserster Position angeordneten benachbarten Batteriezelle in Kontakt. Das erste Spannelement 8 ist insbesondere als Federelement ausgebildet und kann daher seine Form derart ändern, dass es flächig auf der Seitenfläche der Batteriezelle 15 aufliegt. Mittels des ersten Spannelements 8 wird im Einbauzustand eine Druckkraft auf den Zellstapel ausgeübt.

Gemäss des vorliegenden Ausführungsbeispiels kommt die konvexe Oberfläche des zweiten Spannelements 18 mit der Seitenfläche der an äusserster Position angeordneten benachbarten Batteriezelle 15 in Kontakt. Das zweite Spannelement 18 ist insbesondere als Federelement ausgebildet und kann daher seine Form derart ändern, dass es flächig auf der Seitenfläche der Batteriezelle 15 aufliegt. Mittels des zweiten Spannelements 18 wird im Einbauzustand eine Druckkraft auf den Zellstapel ausgeübt. Insbesondere wird mittels des ersten Spannelements 8 eine erste Druckkraft auf den Zellstapel ausgeübt, mittels des zweiten Spannelements 18 eine zweite Druckkraft auf den Zellstapel ausgeübt, wobei die erste Druckkraft entgegengesetzt zur zweiten Druckkraft wirkt, sodass der Zellstapel in der Batteriezellenhalterung 5 eingespannt wird.

Insbesondere ist zwischen dem mindestens einen Spannelement 8, 18 und dem ersten und zweiten Halterungselement 1, 2 eine Steckverbindung ausgebildet. Gemäss des ersten Ausführungsbeispiels ist zwischen dem ersten Halterungselement 1 und dem zweiten Halterungselement 2 ein erstes Spannelement 8 angeordnet, welches sich im Einbauzustand zwischen dem ersten Verbindungselement 6 des ersten Halterungselements 1 und dem ersten Verbindungselement 16 des zweiten Halterungselements 2 erstreckt. Zwischen dem ersten Halterungselement 1 und dem zweiten Halterungselement 2 ist ein zweites Spannelement 18 angeordnet, welches sich im Einbauzustand zwischen dem zweiten Verbindungselement 7 des ersten Halterungselements 1 und dem zweiten Verbindungselement 17 des zweiten Halterungselements 2 erstreckt.

Insbesondere ist zwischen dem ersten Spannelement 8 und dem ersten und zweiten Halterungselement 1, 2 eine Steckverbindung ausgebildet und zwischen dem zweiten Spannelement 18 und dem ersten und zweiten Halterungselement 1, 2 eine Steckverbindung ausgebildet.

Gemäss dieses Ausführungsbeispiels kann das erste Spannelement 8 in einer Ausnehmung aufgenommen sein, die im ersten Verbindungselement 6 des ersten Halterungselements 1 angeordnet ist und in einer weiteren Ausnehmung aufgenommen sein, die im ersten Verbindungselement 16 des zweiten Halterungselements 2 angeordnet ist. Das zweite Spannelement 18 kann in einer Ausnehmung aufgenommen sein, die im zweiten Verbindungselement 7 des ersten Halterungselements 1 angeordnet ist und in einer weiteren Ausnehmung aufgenommen ist, die im zweiten Verbindungselement 17 des zweiten Halterungselements 2 angeordnet ist.

Ein Verfahren zum Einbau einer Mehrzahl von Batteriezellen 15 eines Energiespeichers in ein Batteriemodulgehäuse 10, wobei die Batteriezellen 15 einen Zellstapel ausbilden, verfolgt die Zielsetzung den Zellstapel in einer Batteriezellenhalterung 5 aufzunehmen. Die Batteriezellenhalterung 5 umfasst ein erstes Halterungselement 1 und ein zweites Halterungselement 2, wobei die ersten und zweiten Halterungselemente 1, 2 über den Zellstapel gestülpt werden, sodass die ersten und zweiten Halterungselemente 1, 2 den Zellstapel ringförmig umgeben. Jedes der ersten und zweiten Halterungselemente 1, 2 umfasst je ein erstes längsseitiges Halteelement 3, 13, je ein zweites längsseitiges Halteelement 4, 14 und je ein erstes und ein zweites Verbindungselement 6, 7, 16, 17. Die entsprechenden ersten und zweiten Verbindungselemente 6, 7, 16, 17 bilden je eine erste und zweite Querverbindung zu den entsprechenden ersten und zweiten längsseitigen Halteelementen 3, 4, 13, 14 aus. Zwischen dem ersten Halterungselement 1 und dem zweiten Halterungselement 2 wird ein erstes Spannelement 8 angeordnet, welches sich im Einbauzustand zwischen dem ersten Verbindungselement 6 des ersten Halterungselements 1 und dem ersten Verbindungselement 16 des zweiten Halterungselements 2 erstreckt. Zwischen dem ersten Halterungselement 1 und dem zweiten Halterungselement 2 wird ein zweites Spannelement 18 angeordnet, welches sich im Einbauzustand zwischen dem zweiten Verbindungselement 7 des ersten Halterungselements 1 und dem zweiten Verbindungselement 17 des zweiten Halterungselements 2 erstreckt, wobei das erste Spannelement 8 eine erste Druckkraft auf den Zellstapel ausübt, wobei das zweite Spannelement 18 eine zweite Druckkraft auf den Zellstapel ausübt, wobei die erste Druckkraft entgegengesetzt zur zweiten Druckkraft wirkt, sodass der Zellstapel in der Batteriezellenhalterung 5 eingespannt wird.

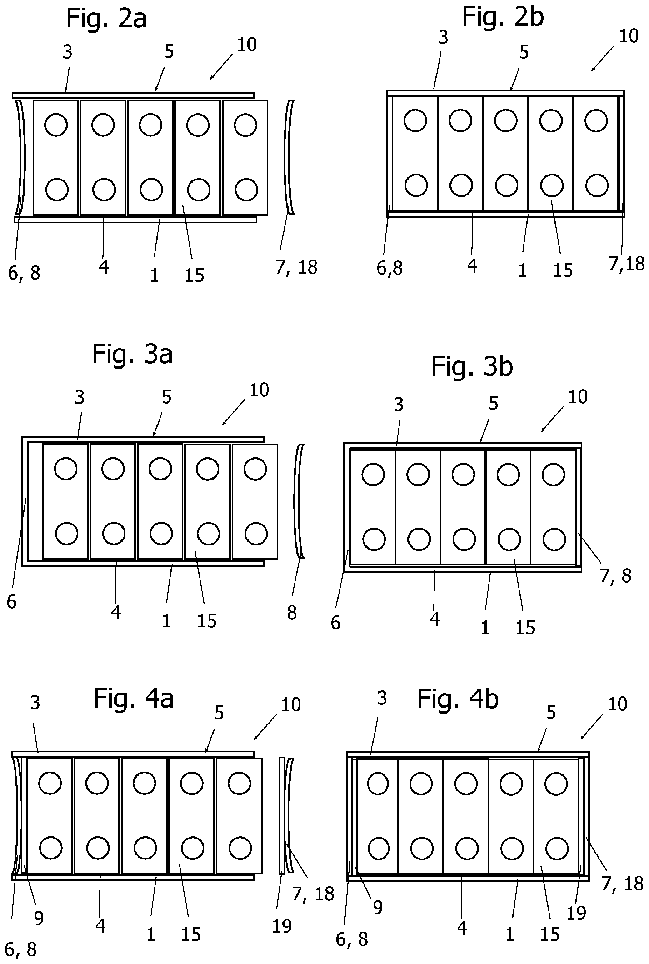

Fig. 2a zeigt eine Ansicht eines Batteriemodulgehäuses 10 nach einem zweiten Ausführungsbeispiel vor dem Zusammenbau in einer Ansicht von oben. Gleiche oder gleichwirkende Bauelemente werden mit denselben Referenznummern versehen wie im vorhergehenden Ausführungsbeispiel und auf die Beschreibung zu Fig. 1a bis fig. 1d wird verwiesen. Das zweite Ausführungsbeispiel unterscheidet sich vom vorhergehenden Ausführungsbeispiel dahingehend, dass sich die Anzahl der Batteriezellen 15 sowie deren Abmessungen unterscheiden. Zudem werden die ersten und zweiten Verbindungselemente 6, 7 des ersten Halterungselements 1 durch das erste und zweite Spannelement 8, 18 ausgebildet.

Ein Verfahren zum Einbau einer Mehrzahl von Batteriezellen 15 eines Energiespeichers in ein Batteriemodulgehäuse 10 wird nachfolgend beschrieben. Die Batteriezellen 15 bilden einen Zellstapel aus, wobei der Zellstapel in einer Batteriezellenhalterung 5 aufgenommen wird. Die Batteriezellenhalterung 5 umfasst ein Halterungselement 1, wobei das Halterungselement 1 den Zellstapel ringförmig umgibt. Das Halterungselement 1 umfasst ein erstes längsseitiges Halteelement 3, ein zweites längsseitiges Halteelement 4 und ein erstes und ein zweites Verbindungselement 6, 7. Die entsprechenden ersten und zweiten Verbindungselemente 6, 7 werden derart mit den dem ersten längsseitigen Halteelement 3 und dem ein zweiten längsseitigen Halteelement 4 verbunden, dass eine erste und zweite Querverbindung zu den entsprechenden ersten und zweiten längsseitigen Halteelementen 3, 4 ausgebildet wird. Zumindest eines der ersten oder zweiten Verbindungselemente 6, 7 enthält ein Spannelement 8, 18, sodass Batteriezellenhalterung 5 eine Druckkraft auf die Batteriezellen 15 ausübt, wenn das Spannelement 8, wie in Fig. 3a und 3b gezeigt wird oder die Spannelemente 8, 18, wie in Fig. 2a und Fig. 2b bzw. in Fig. 4a und Fig. 4b gezeigt ist, mit dem ersten längsseitigen Halteelement 3 und dem ein zweiten längsseitigen Halteelement 4 verbunden sind.

Fig. 2b zeigt eine Ansicht des Batteriemodulgehäuses 10 gemäss Fig. 2a nach dem Zusammenbau. Gemäss des zweiten Ausführungsbeispiels wird das erste Spannelement 8 mit dem ersten längsseitigen Halteelement 3 und dem zweiten längsseitigen Halteelement 4 der Batteriezellenhalterung 5 verbunden. Die vormontierte Baugruppe enthaltend das erste Spannelement 8, das erste längsseitige Halteelement 3 und das zweite längsseitige Halteelement 4 wird über den Zellstapel der Batteriezellen geschoben oder der Zellstapel wird in die vormontierte Baugruppe eingeschoben. Über den Zellstapel oder durch ein nicht dargestelltes Montagewerkzeug wird eine Druckkraft auf das Spannelement 8 ausgeübt, sodass sich das Spannelement 8 derart verformt, dass es eine flächige Auflage des Spannelements 8 auf der Seitenwand der Batteriezelle 15 erfolgt. Durch das Spannelement 8, welches ein erstes Spannelement ausbildet, wird somit das erste Verbindungselement 6 geschaffen.

Sobald der Batteriezellenstapel derart in Bezug auf das erste längsseitige Halteelement 3 und das zweite längsseitige Halteelement 4 positioniert ist, dass das zweite Spannelement 18 mit dem ersten längsseitigen Halteelement 3 und dem zweiten längsseitigen Halteelement 4 verbunden werden kann, erfolgt die Verbindung des zweiten Spannelements 18 mit dem ersten längsseitigen Halteelement 3 und dem zweiten längsseitigen Halteelement 4, wodurch das zweite Verbindungselement 7 hergestellt wird. Die ersten und zweiten Spannelemente werden derart vorgespannt, dass die die Krümmung zumindest teilweise ausgeglichen wird. In Fig. 2b ist die Situation gezeigt, gemäss welcher die Krümmung der ersten und zweiten Spannelemente verschwindet, sodass die Spannelemente vollständig auf den Seitenflächen der angrenzenden Batteriezellen 15 aufliegen.

Die Batteriezellen 15 werden über das erste und zweite Spannelement 8, 18 mit einer Druckkraft beaufschlagt. Wenn es zur Volumenvergrösserung durch Schwellverhalten kommen sollte, würde sich der Druck auf die ersten und zweiten Spannelement 8, 18 erhöhen und somit würden die Batteriezellen im Gegenzug einem erhöhten Druck ausgesetzt, sodass ein Schwellverhalten verhindert werden kann. Gemäss eines nicht dargestellten Ausführungsbeispiels ist es auch möglich, die Krümmungen der ersten und zweiten Spannelemente 8, 18 bei der Montage des Batteriemodulgehäuses 10 nicht vollständig auszugleichen, sondern jedes der ersten und zweiten Spannelemente 8, 18 mit einer Vorspannung zu montieren, bei welcher nach dem Zusammenbau noch eine Restkrümmung bestehen bleibt. Gemäss dieses Ausführungsbeispiels können die ersten und zweiten Spannelemente 8, 18 ein Schwellverhalten noch geringfügig kompensieren, indem die Restkrümmung durch die zusätzlich durch das Schwellverhalten auftretende Druckkraft ausgeglichen wird.

Fig. 3a zeigt eine Ansicht eines Batteriemodulgehäuses nach einem dritten Ausführungsbeispiel vor dem Zusammenbau, welches sich von dem in Fig. 2a dargestellten Ausführungsbeispiel dahingehend unterscheidet, das das erste Verbindungselement 6 nicht als Spannelement ausgebildet ist. Das erste längsseitige Halteelement 3 und das zweite längsseitige Halteelement 4 und das erste Verbindungselement 6 können gemäss dieses Ausführungsbeispiels eine Einheit ausbilden.

Beim Einbau des Zellstapels der Batteriezellen 15 zur Herstellung des Batteriemodulgehäuses 10 wird der Zellstapel in das erste längsseitige Halteelement 3 und das zweite längsseitige Halteelement 4 eingeschoben, bis dessen äusserste Batteriezelle auf dem Verbindungselement 6 aufliegt. Anschliessend wird das Spannelement 8 mit dem ersten längsseitigen Halteelement 3 und dem zweiten längsseitigen Halteelement 4 verbunden. Das Spannelement 8 bildet gemäss dieses Ausführungsbeispiels das zweite Verbindungselement 7 aus.

Die Batteriezellen 15 werden über das Spannelement 8 mit einer Druckkraft beaufschlagt. Wenn es zur Volumenvergrösserung durch Schwellverhalten kommen sollte, würde sich der Druck auf das Spannelement 8 erhöhen und somit würden die Batteriezellen im Gegenzug einem erhöhten Druck ausgesetzt, sodass ein Schwellverhalten verhindert werden kann. Gemäss eines nicht dargestellten Ausführungsbeispiels ist es auch möglich, die Krümmung des Spannelements 8 bei der Montage des Batteriemodulgehäuses 10 nicht vollständig auszugleichen, sondern das Spannelement mit einer Vorspannung zu montieren, bei welcher nach dem Zusammenbau noch eine Restkrümmung bestehen bleibt. Gemäss dieses Ausführungsbeispiels kann das Spannelement 8 ein Schwellverhalten noch geringfügig kompensieren, indem die Restkrümmung durch die zusätzlich durch das Schwellverhalten auftretende Druckkraft ausgeglichen wird.

Fig. 3b zeigt eine Ansicht des Batteriemodulgehäuses gemäss Fig. 3a nach dem Zusammenbau, welches sich von dem zweiten Ausführungsbeispiel gemäss Fig. 2b nur insoweit unterscheidet, dass das erste Verbindungselement 6 nicht als Spannelement ausgebildet ist und das zweite Verbindungselement 7 das einzige Spannelement 8 enthält. Selbstverständlich könnte gemäss eines nicht dargestellten Ausführungsbeispiels die Position des Spannelements 8 vertauscht sein, d.h. das erste Verbindungselement 6 ist als Spannelement 8 ausgebildet, und das zweite Verbindungselement 7 ist nicht als Spannelement 8 ausgebildet.

Fig. 4a zeigt eine Ansicht eines Batteriemodulgehäuses nach einem vierten Ausführungsbeispiel vor dem Zusammenbau, welches sich von dem in Fig. 2a dargestellten Ausführungsbeispiel dahingehend unterscheidet, dass die ersten und zweiten Spannelemente 8, 18 je ein Lastverteilungselement 9, 19 enthalten. Der Zusammenbau kann wie in Zusammenhang mit dem zweiten Ausführungsbeispiel beschrieben, erfolgen.

Fig. 4b zeigt eine Ansicht des Batteriemodulgehäuses gemäss Fig. 4a nach dem Zusammenbau.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Batteriemodulgehäuse (10) für eine Mehrzahl von Batteriezellen (15) eines Energiespeichers enthaltend eine Batteriezellenhalterung (5), welche zur Aufnahme der einen Zellstapel bildenden Batteriezellen (15) ausgebildet ist, **dadurch gekennzeichnet, dass** die Batteriezellenhalterung (5) ein Halterungselement (1,2) umfasst, wobei das Halterungselement (1,2) ausgebildet ist, den Zellstapel ringförmig zu umgeben, wobei das Halterungselement (1, 2) ein erstes längsseitiges Halteelement (3, 13), ein zweites längsseitiges Halteelement (4, 14), ein erstes Verbindungselement (6, 16) und ein zweites Verbindungselement (7, 17) umfasst, wobei durch die ersten und zweiten Verbindungselemente (6, 7, 16, 17) eine erste und zweite Querverbindung zu den ersten und zweiten längsseitigen Halteelementen (3, 4, 13, 14) ausgebildet ist, wobei zumindest eines der ersten oder zweiten Verbindungselemente (6, 7, 16, 17) ein Spannelement (8, 18) enthält.

2. Batteriemodulgehäuse nach Anspruch 1, wobei das Spannelement (8, 18) eine Krümmung aufweist, wenn es nicht eingespannt ist, wobei das Spannelement (8, 18) beispielsweise eine Blattfeder umfasst.

3. Batteriemodulgehäuse nach einem der vorhergehenden Ansprüche, wobei das Spannelement (8, 18) ein Lastverteilungselement (9, 19) enthält.

4. Batteriemodulgehäuse nach einem der vorhergehenden Ansprüche, wobei zumindest eines der Halterungselemente (1,2) oder der Spannelemente (8, 18) einen elektrischen Leistungsanschluss enthält.

5. Batteriemodulgehäuse nach einem der vorhergehenden Ansprüche, wobei das Halterungselement (1,2) und das Spannelement (8, 18) aus elektrisch isolierenden Materialien hergestellt sind.

6. Batteriemodulgehäuse nach einem der vorhergehenden Ansprüche, wobei das Halterungselement (1, 2) eine Mehrzahl von Segmenten enthält.

7. Batteriemodulgehäuse nach Anspruch 6, wobei je zwei benachbarte Segmente durch ein Filmgelenk miteinander verbunden sind.

8. Batteriemodulgehäuse (10) für eine Mehrzahl von Batteriezellen (15) eines Energiespeichers nach einem der vorhergehenden Ansprüche, wobei die Batteriezellenhalterung (5) ein erstes Halterungselement (1) und ein zweites Halterungselement (2) umfasst, wobei die ersten und zweiten Halterungselemente (1,2) ausgebildet sind, den Zellstapel ringförmig zu umgeben, wobei jedes der ersten und zweiten Halterungselemente (1, 2) je ein erstes längsseitiges Halteelement (3, 13), je ein zweites längsseitiges Halteelement (4, 14) und je ein erstes Verbindungselement (6, 16) und ein zweites Verbindungselement (7, 17) umfasst, wobei durch die entsprechenden ersten und zweiten Verbindungselemente (6, 7, 16, 17) je eine erste und zweite Querverbindung zu den entsprechenden ersten und zweiten längsseitigen Halteelementen (3, 4, 13, 14) ausgebildet ist, wobei zwischen dem ersten Halterungselement (1) und dem zweiten Halterungselement (2) zumindest ein erstes oder zweites Spannelement (8, 18) angeordnet ist, welches sich im Einbauzustand zwischen dem ersten Halterungselement (1) und dem zweiten Halterungselement (2) erstreckt.

9. Verfahren zum Einbau einer Mehrzahl von Batteriezellen (15) eines Energiespeichers in ein Batteriemodulgehäuse (10), wobei die Batteriezellen (15) einen Zellstapel ausbilden, wobei der Zellstapel in einer Batteriezellenhalterung (5) aufgenommen wird wobei die Batteriezellenhalterung (5) ein Halterungselement (1, 2) umfasst, wobei das Halterungselement (1, 2) den Zellstapel ringförmig umgibt, wobei das Halterungselement (1, 2) ein erstes längsseitiges Halteelement (3, 13), ein zweites längsseitiges Halteelement (4, 14) und ein erstes und ein zweites Verbindungselement (6, 7, 16, 17) umfasst, wobei die entsprechenden ersten und zweiten Verbindungselemente (6, 7, 16, 17) derart mit den dem ersten längsseitigen Halteelement (3, 13) und dem ein zweiten längsseitigen Halteelement (4, 14) verbunden werden, dass eine erste und zweite Querverbindung zu den entsprechenden ersten und zweiten längsseitigen Halteelementen (3, 4, 13, 14) ausgebildet wird, wobei zumindest eines der ersten oder zweiten Verbindungselemente (6, 7, 16, 17) ein Spannelement (8, 18) enthält, sodass Batteriezellenhalterung (5) eine Druckkraft auf die Batteriezellen (15) ausübt.

10. Verfahren nach Anspruch 9, wobei oder wobei ein erstes und ein zweites Halterungselement (1, 2) mit dem Zellstapel verbunden werden, wobei zwischen dem ersten Halterungselement (1) und dem zweiten Halterungselement (2) ein erstes Spannelement (8) angeordnet wird, welches sich im Einbauzustand zwischen dem ersten Verbindungselement (6) des ersten Halterungselements (1) und dem ersten Verbindungselement (16) des zweiten Halterungselements (2) erstreckt und wobei zwischen dem ersten Halterungselement (1) und dem zweiten Halterungselement (2) ein zweites Spannelement (18) angeordnet wird, welches sich im Einbauzustand zwischen dem zweiten Verbindungselement (7) des ersten Halterungselements (1) und dem zweiten Verbindungselement (17) des zweiten Halterungselements (2) erstreckt, wobei das erste Spannelement (8) eine erste Druckkraft auf den Zellstapel ausübt, wobei das zweite Spannelement (18) eine zweite Druckkraft auf den Zellstapel ausübt, wobei die erste Druckkraft entgegengesetzt zur zweiten Druckkraft wirkt, sodass der Zellstapel in der Batteriezellenhalterung (5) eingespannt wird.
